# EUROPEAN PATENT SPECIFICATION

(11) **EP 2 507 331 B1**
(45) Date of publication and mention of the grant of the patent: **06.08.2014**
(21) Application number: 10788308.4
(22) Date of filing: 03.12.2010
(51) Int. Cl.: C09D 11/10, C08F 2/38, C08F 220/36

(54) **POLYMER, PROCESS AND COMPOSITION**
POLYMER, VERFAHREN UND ZUSAMMENSETZUNG
POLYMÈRE, PROCÉDÉ ET COMPOSITION

(30) Priority: 03.12.2009 EP 09177913
(43) Date of publication of application: 10.10.2012
(73) Proprietor: DSM IP Assets B.V., 6411 TE Heerlen (NL)
(72) Inventor: SMAK, Yvonne, Wilhelmina, Waalwijk 5145 PE (NL); HILST VAN, Johannes, NL-5145 PE Waalwijk (NL); OVERBEEK, Gerardus, Cornelis, NL-5145 PE Waalwijk (NL)
(74) Representative: Kirk, Martin John
(86) International application number: PCT/EP2010/068834
(87) International publication number: WO 2011/067375

(56) References cited:
- EP-A2- 1 055 713
- WO-A1-95/04767
- WO-A1-96/19512
- US-A- 5 691 405

## Description

The present invention relates to the field of polymer compositions especially oligomer-polymeric binders suitable for use as inks.

Polymeric binders for use in inks must have a delicate balance of properties for the ink to be both useable in common printing methods and also for the ink image to be durable after printing. Properties such as chemical resistance require inks binders having high molecular weight polymers whereas to be printable inks require low molecular weight oligomers (for example so the inks can self dissolve to allow cleaning of printing rollers). Reversibility of the ink is also important on typical printed substrates such as polyolefin and polyester.

Cross-linkers are sometimes added to the ink binder to improve the properties of the ink image after printing for example to improve chemical resistance. Using cross-linkers is disadvantageous as they can be expensive.

It would be desirable to provide improved binders for inks to produce inks with an improved balance of chemical resistance and printability and/or substantially free of cross-linkers.

US 5744540 (BASF) and EP 0710680 (BASF) describe polymer compositions which have 0.1 to 10% by weight of a nitrogen containing monomer used to promote adhesion to wet surfaces.

WO 1999-18157 (Union Carbide) and EP 1034218 describe polymer compositions having ureido monomers.

US 5739196 (Union carbide) disclose ureido containing polymer compositions prepared from amounts of ureido monomer of 0.1 to 10%.

WO95/04767 discloses binders for the preparation of aqueous inks, wherein said binders are based on the copolymerisation of low molecular weight oligomers and a hydrophobic polymer, said low molecular weight oligomer having a number average molecular weight in the range 500-50.000 and is obtained by free radical polymerisation in the presence of a regulator.

EP1055713 discloses film-forming binders for inks and seeks to provide such binders with improved resistance to smear abrasion and washing, said binders comprise ureido (meth)acrylic monomers.

Polymer compositions containing ureido monomers are also described in US 4151142 (Air products), EP 0379892 (Röhm) and US 5021469, US 6552116 (BASF), EP 0609756 (National Starch), US 2003-0194499 and WO 2003-082993 (Rhodia).

So ureido monomers are well known in many applications. For example they canbe polymerised and/or copolymerised in bulk, suspension, emulsion and solution. The resultant polymers are used in the plastics, paint, leather, paper and textile industries. Ureido monomers are also known to promote wet adhesion of water borne dispersions and emulsion coatings and provide improved cohesion performances to pressure sensitive adhesive (PSA) and improve the mechanical strength of coating systems. However ureido monomers have not been used to make ink binders.

The applicant has surprisingly found that ink binders with a ureido monomer incorporated in a polymer such as an acrylic copolymer have additional unexpected advantages. These advantages are present even when an ureido monomer is incorporated in inks which have already good wet adhesion where it might be expected that the use of such monomers would be unnecessary.

A preferred meaning of the term 'binder' as used herein means (unless the context clearly indicates otherwise) a binder suitable for formulating in an ink suitable for surface printing onto flexible substrates.

The applicant has also found that certain polymeric binders for inks when prepared using certain chain transfer agents and/or certain surfactants have improved properties such as better chemical resistance.

The applicant has also found that particularly improved ink oligomer-polymer binders may be prepared by polymerising ureido monomers in the presence of monomers such as acrylic monomers optionally using certain chain transfer agents and/or certain surfactants.

Such ink binders impart desired properties to the ink (such as chemical resistance).

It is an object of the invention to solve some or all or the problems identified herein. A preferred object of the invention provides an improved ink.

Therefore broadly in accordance with one aspect of the present invention there is provided a polymeric binder as disclosed in the claims, an oligomer- polymeric system suitable as a binder for an ink, the binder comprising particles in which:
A) one part and/or set of said particles is substantially oligomeric and is obtained and/or obtainable from polymerisation of:
   i) optionally and independently at least one ureido functional moiety of Formula 1 (as defined herein, Component A-I), further optionally in an amount of greater than or equal to 0.01 %;
   ii) optionally at least one other ethylenically unsaturated monomer (Component A-II), in an amount of less than or equal to 96.99%;
   iii) at least one acid and/or anhydride functional ethylenically unsaturated monomer other than Components A-I to A-II (Component A-III) in an amount of greater than or equal to 3%;
      where all amounts of Components A-I to A-IIII are percentages by weight of the total amount of moieties used to prepare the oligomer and do not total more than 100%; and
B) another part and/or set of said particles is substantially polymeric and is obtained or obtainable from polymerisation of:
   i) optionally and independently at least one ureido functional moiety of Formula 1 (as described for Component A-I but independent thereof) (Component B-I), further optionally in an amount of greater than or equal to 0.01%; and
   ii) optionally at least one other ethylenically unsaturated monomer (Component B-II), further in an amount of less than or equal to 100%;
      where all amounts of Components B-I to B-II are percentages by weight of the total amount of the moieties used to prepare polymer B and do not total more than 100%;
      where at least one of the optional ureido components (A-I and B-I) are present.

For example some embodiments of the invention the oligomer-polymer may be prepared together (e.g. in situ where the polymer is prepared in the presence of the oligomer or vice versa) and/or the polymer and/or oligomer may be prepared separately and then blended together.

For example some embodiments of the invention may comprise the ureido only in oligomer, or the ureido only in polymer or the ureido in both the oligomer and the polymer. Where the ureido components are present in both the oligomer and polymer they may be the same or different.

In preferably oligomer-polymer systems of the invention the total amount of ureido monomer is more than 1.5% by weight, more preferably 5% by weight, most preferably 8% of the total monomers used to prepare the system.

Preferred oligomer-polymer systems of the invention are those where the oligomer, polymer or preferably both comprise no more than 20% (by total weight of monomers used to prepare the oligomer or polymer) of arylalkylene monomer(s), more preferably no more than 10%, most preferably no more than 5%, especially no more than 3%, for example are substantially free of such monomers. Arylalkylene monomers may comprise optionally substituted, hydrocarbo substituted phenyl groups, conveniently C₁₋₁₀hydrocarbylphenyl groups, more conveniently C₁₋₄alkylphenyl groups, most conveniently consists of styrene, α-methyl styrene, vinyl toluene, t-butyl styrene and/or di-methyl styrene monomers and/or mixtures thereof, especially styrene.

Preferred embodiments of the invention may be comprise ink and/or ink-binder compositions that comprise the above oligomer- polymeric system and exhibit at least one of those desired properties described herein (such as those below) and/or any combinations thereof that are not mutually exclusive.

It is a preferred feature that the binder of the invention has (and/or can be incorporated without detriment in systems that have) a benign or very low adverse impact after ingestion by biological systems. It is more preferred that binders of the invention (and any inks and/or compositions comprising them) comply with the conditions set out in one or more of the relevant EU regulations as of the filing date of the present application, namely: 1935/2004/EC (framework), 2002/72/EC (monomers), 2004/1/EC (1st amendment), 2004/19/EC (2nd amendment), 2005/79/EC (3rd amendment), 2007/19/EC (4th amendment), 2008/39/EC (5th amendment) and/or 2009/975/EC (6^{th} amendment).

Usefully inks and/or ink-binders of the invention exhibit one or more improved propert(ies) (such as those described herein) with respect to known compositions. More usefully such improved properties may be in a plurality, most usefully three or more of those properties below that are not mutually exclusive.

Conveniently inks and/or ink-binders of the invention exhibit one or more comparable propert(ies) (such as those described herein) with respect to known compositions. More usefully such comparable properties may be in two or more, most usefully three or more, for example all of those properties below that are not improved and/or mutually exclusive.

Improved propert(ies) as used herein denotes that the value of one or more parameter(s) of the ink and/or ink-binder of the present invention is > +8 % of the value of that parameter for the reference ink and/or ink-binder described herein, more preferably > +10 %, even more preferably > +12 %, most preferably > +15 %.

Comparable properties as used herein means the value of one or more parameter(s) of the ink and/or ink-binder of the present invention is within +/-6 % of the value of that parameter for the reference ink and/or ink-binder described herein, more preferably +/- 5 %, most preferably +/- 4 %.

The known reference ink and ink-binder material for these comparisons are:
a) For an ink related property, the same ink formulation (to that of the invention being compared, i.e. consisting of same ingredients [other than binder], mixed together in the same amount) and also comprising a similar ink binder to that of the invention being compared, except the binder is substantially free of ureido component(s) A(i) and/or B(i) but otherwise consists of the same oligomer-polymer system prepared from the same monomers in the same amounts as the binder of the invention being compared;
b) For an ink binder related property, a similar binder (to that of the invention being compared) which comprises the same oligomer- polymeric system prepared in the same way except the binder prepared without any ureido component(s) A(i) and/or B(i) but otherwise consists of the same oligomer-polymer system prepared from the same monomers in the same amounts as the binder of the invention being compared.

The percentage differences for improved and comparable properties herein refer to fractional differences between the ink and/or the ink-binder of the invention and the known the ink and/or the ink-binder where the property is measured in the same units in the same way (i.e. if the value to be compared is also measured as a percentage it does not denote an absolute difference).

Inks of the invention are non-tacky as confirmed by tests such as blocking resistance and the cotton wool test.

Printability is a combination of various properties like reversibility, transfer, wetting, cleanability. The inks of the invention have comparable or better printability to prior art inks.

Chemical (for example ethanol) resistance (as measured by any suitable method such as percentage of surface that remains intact). Inks of the invention have improved chemical resistance (see data herein). The Satra instrument may also be used to test chemical resistance to various chemicals.

### Polymerisation methods for step A

Preferred oligomer-polymer systems of the invention are vinyl polymers that also comprise some uredio monomer. These systems (for example oligomer component A) may be obtained by the oligomer component A may be obtained by any suitable polymerisation methods such as emulsion, solution and/or bulk polymerisation, preferably emulsion polymerisation.

In one a preferred embodiment of the invention the polymerisation method in step (A) (which usefully is emulsion polymerisation) occurs in the presence of
iv) at least one agent to control molecular weight, optionally in an amount of at least about 0.01 % by weight of total monomer used to prepare the oligomer; and/or
v) at least one surfactant, optionally where the surfactant is present in an amount of at least about 0.01 % by weight of total monomer used to prepare the oligomer.

More preferred molecular weight control agent(s) may comprise: an agent for catalytic chain transfer polymerisation (CCTP), an agent for reversible addition-fragmentation chain transfer (RAFT) and/or a chain transfer agent (CTA). Most preferably the molecular weight control agent may be a CTA selected from the group consisting of: halo substituted hydrocarbons, thioglycolic acid, hydrocarbomercaptans, and/or acid, salt and/or ester derivatives thereof and/or mixtures thereof.

### Weight %

The respective percentages (where present) of Components AI, AII, AIII, BI and BII will total 100% of the weight of the respective oligomer A and polymer B unless other components are present.

### Molecular weight control agent (e.g. CTA)

Where the molecular weight control agent is a CTA, usefully it may comprise one or more: thioglycolic acid, C₁₋₂₀hydrocarbomercaptans and/or ester derivatives thereof and/or mixtures thereof.

More useful CTAs comprise: thioglycolic acid, C₈₋₁₆alkylmercaptan, and/or C₈₋₁₄alkylthioglycolates;

In a further embodiment of the invention the CTA is selected from the group consisting of:
n-dodecylmercaptan, tertiary-dodecylmercaptan, 2-mercaptoethanol, mercaptoethyl decanoate, mercaptoethyl octanoate, mercaptoethyl oleate, mercaptoethyl tallate, methyl 3-mercaptopropionate, C₈₋₁₆tertiary-alkylmercaptans, tridecyl mercaptan, thioglycolic acid, iso-octyl thioglycolate, 2-ethylhexyl thioglycolate and mixtures thereof.

Other well known CTAs may be used such as any of:
4,4'-thiobisbenzenethiol, 4-methylbenzenethiol, bromotrichloromethane, Isooctyl 3-mercaptopropionate, pentaerythritol tetrakis(2-mercaptoacetate), pentaerythritol tetrakis(3-mercaptopropionate), suitable isomers thereof and/or suitable mixtures thereof.

The CTA may be independently used to prepare the oligomer A in an amount from about 0.1 % to about 10%, preferably from about 0.1 % to about 8%, more preferably from about 1.0% to about 6%, most preferably from about 2% to about 5% by weight of the total weight of monomers used to prepare the oligomer A.

### Surfactant

Preferred surfactants used to prepare oligomer A may comprise: C₈₋₁₆hydrocarbo-oxysulpho salts and esters;
more preferably salts comprising linear C₁₀₋₁₄hydrocarboSO₄⁻ anions; and most preferably salts comprising a linear C₁₂hydrocarbylSO₄⁻ anion.

Other suitable surfactants may be selected from one or more of the following:
C₁₀₋₁₃n-alkyl benzene sulfonic acids and/or derivatives thereof (e.g. salts and/or esters); phenol esters of C₁₀₋₂₀alkyl sulfonic acids;
C₈₋₂₂alkyl sulfur primary unsaturated acids with an even number of carbon atoms;
hydroxy octadecansulfonates and salts (e.g. sodium salts) thereof;
C₁₂₋₂₀ hydroxy fatty acids and sulphur and/or acetylated derivates thereof and/or salts (e.g. sodium, potassium and/or ammonium salts) thereof;
alkyl sulfates, such as tri ethanol amine salts;
C₁₀₋₂₀alkyl sulfonates;
C₁₀₋₂₀aryl sulfonates;
Dimethyl di(C₈₋₁₈ alkyl)ammonium chloride, preferably no more than 0.005%, by weight of the final composition to which it is added
acyl-, alkyl-, oleyl- and /or alkylaryl- oxethylates and sulfur analogues thereof;
alkali salts of esters from sulfo succinic acids and monohydric aliphatic saturated C₄₋₁₆ alcohols;
sulfo succinic 4-esters with polyethyleneglycols of monohydric aliphatic C₁₀₋₁₂₁₆ alcohols; and salts (e.g disodium salts) thereof;
sulfo succinic 4-esters with polyethyleneglycol nonylphenylethers (NPE); and salts (e.g disodium salts) thereof;
sulfo succinic acid cyclohexyl esters and salts (e.g sodium salts) thereof;
lignin sulfonic acids and salts (e.g. calcium, magnesium, sodium and ammonium salts) thereof;
dodecyl diphenyl ether disulfonates (such as the sodium salt thereof);
copolymers having a minimum content of ethylene oxide (EO) and/or propylene oxide (PO) of 10% by weight of total copolymer;
ethylene oxide;
lecithin;
   4 [1-methyl-2 [(1-oxo-9-octadecenyl) amino] ethyl] - 2-sulfosuccinates (such as disodium salts thereof);
di-nonylphosphates;
C₁₂₋₂₀ Alkylsulfonates
polyvinyl alcohol
sodium lauryl sulphate;
   di-octyl sodium sulfo succinates;
   and/or mixtures and/or combinations thereof.

The surface active agent may be independently used to prepare the oligomer A in an amount from about 0.1 % to about 15%, preferably from about 0.1 % to about 10%, more preferably from about 0.2% to about 7.5%, most preferably from about 0.5% to about 5% by weight of the total weight of monomers used to prepare the oligomer A.

### Component I (Formula 1) for Oligomer A and/or Polymer B

Polymers and oligomers used in the present invention are obtained and/or obtainable from at least one ureido functional moiety (Component I).
As used herein 'ureido-functional moiety' means a moiety of Formula 1: 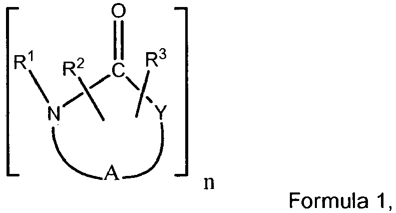 where
Y denotes an electronegative group,
R¹ is H, OH or a C₁₋₃₀organo group, preferably, H, OH or an optionally hydroxyl substituted C₁₋₁₀hydrocarbo;
R² is H or a C₁₋₃₀organo group, preferably H or a C₁₋₁₀hydrocarbo;
R³ is H or a C₁₋₃₀organo group comprising an ethylenically unsaturated group, preferably H or a C₁₋₁₀hydrocarbo substituted by at least one ethylenically unsaturated moiety and
either
A represents a divalent organo moiety attached to both the -NR¹- and -Y- moieties so the -A-, -NR⁰-, -C(=O)- and -Y- moieties together represent a ring having from 4 to 8 ring atoms, and R² and R³ are attached to any suitable moiety on the ring;
or
A is not present (i.e. Formula 1 represents a linear and/or branched moiety that does not comprise a heterocyclic ring) in which case R² and R³ are attached to the R¹ moiety; and
n is an integer from 1 to 4.
where Formula 1 comprises at least one ethylenically unsaturated moiety, for example comprising the whole or part of any of groups R¹, R² and/or R³.

Formula 1 may represent a complete molecule (such as a monomer) or a radical part thereof (in which case Formula 1 may have one or more free valenc(ies) attached to a larger moiety).

Preferably Formula 1 represents a ureido-type monomer where:
Y is -NR⁴- (where R⁴ is H, OH or, optionally hydroxy substituted C₁₋₁₀hydrocarbo) or-O-;
R₁ and R₂ are each independently H or a C₁₋₁₀hydrocarbo; and
R₃ is C₁₋₁₀hydrocarbo optionally substituted by at least one (meth)acrylate;

The ring moiet(ies) of Formula 1 are each attached to R³ and in Formula 1 when n is 2, 3 or 4 then R³ is multi-valent (depending on the value of n). If n is not 1 then R² and -Y- may respectively denote the same or different moieties in each ring, preferably the same respective moieties in each ring. R² and R³ may be attached at any suitable position on the ring.

More preferred monomers of Formula 1 comprise, conveniently consist essentially of, those where:
A represents a optional substituted divalent C₁₋₅hydrocarbylene; and -Y- is -NH- or -O-.

Optional monomers of Formula 1 may comprise those where: n is 1 or 2
-Y- is -NR³- (i.e. where Formula 1 is attached to R³ via a ring nitrogen),
A represents a divalent C₁₋₃hydrocarbylene;
R¹ is H,
R² is a C₁₋₁₀hydrocarbo; and
further optionally R³ comprises a (meth)acryloxyhydrocarbo group or derivative thereof (e.g. maleic anhydride).

Most preferred monomers of Formula 1 comprise those where: n is 1, or 2 and the (optionally repeating) unit in Formula 1 is represented by Formula 2 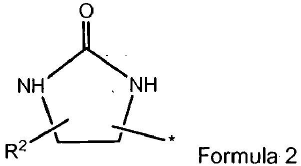 where the asterisk denotes the point of attachment of Formula 2 to R³ (which may be at any suitable point on the ring preferably via a ring nitrogen); and R² is H or C₁₋₁₀hydrocarbyl and optionally R³ comprises a methacryloxyC₁₋₁₀hydrocarbo group.

Conveniently Formula 1 may comprise monomers of Formula 3: 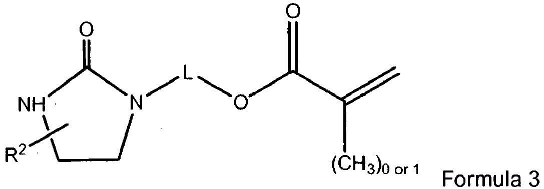 where R² is H or C₁₋₆hydrocarbyl;and
L is a suitable divalent organo linking group (such as C₁₋₁₀hydrocarbylene, for example C₁₋₆alkylene).

Usefully monomers of Formula 1 may be used as a substantially pure compound (or mixture of compounds) of Formula 1 or may be dissolved in a suitable solvent.

Ureido monomers suitable for use in the present invention comprise those with an amide group instead of an ester group attached to the vinyl bond.

Suitable monomers of Formula 1 may also be selected from the group consisting of:
allylalkyl ethylene urea;
N-(2-acryloyloxyethyl) ethylene urea;
N-2-(allylcarbamato) aminoethylimidazolidinone;
N-(3-allyloxy-2-hydroxypropyl) aminoethyl ethylene urea;
N-(beta-acrylamidoethyl) ethylene urea;
N-[3-(1,3-diazacyclohexan-2-on propyl)] methacrylamide;
N-(methacrylamidomethylene) ethylene urea;
N-methacrylamidomethyl urea;
N-(methacrylamidoethyl) ethylene urea;
N-(2-methacryloyloxyacetamidoethyl)-N,N'-ethylene urea;
N-(2-methacryloyloxyethyl) ethylene urea;
N-methacryloyl urea;
and/or mixtures thereof.

Usefully monomers comprising imidazolyl moieties (such as 2-(1-imidazolyl)ethyl methacrylate) may also be used to prepare binders of the invention. The imidazolyl containing monomers may be used in addition to or as substitutes for the ureido monomers of Formula 1 in the same amounts as indicated herein for the monomers of Formula 1.

Further suitable ureido monomers of Formula 1 are also described in documents such as "Novel wet adhesion monomers for use in latex paints" Singh et al, Progress in Organic Coatings, 34 (1998), 214 - 219, (see especially sections 2.2 & 2.3); EP 0629672 (National Starch); and "Developments in Ureido Functional Monomer for Promoting Wet Adhesion in Latex Paints, Water Borne and Higher Solids Coating Composition" by R.W. Kreis, A. M. Sherman at Symposium of 3 - 5 Feb 1988, New Orleans Louisiana, USA. The preceding documents are hereby incorporated by reference.

Moieties of Formula 1 may be independently present in the oligomer A and/or in polymer B (respectively Components A-I and B-I) in an amount from at least about 0.1 %, preferably from about 0.1 % to about 30%, more preferably from about 1.5% to about 25%, most preferably from about 5% to about 15% for example from about 8% to about 12% by weight of the total weight of monomers used to prepare the respective oligomers or polymers used in the present invention.

### Component II for Oligomer A and/or Polymer B

Components AII and/or BII may comprise, conveniently consist essentially of, at least one of those monomers described herein.

The optional component(s) AII and/or BII may comprise, conveniently consist essentially of, at least one monomer comprising at least one ethylenically unsaturated moiety. conveniently at least one (meth)acrylate monomer and/or arylalkylene monomer. Components AII and/or BII may comprise, conveniently consist essentially of, monomers that at least partially water soluble and/or monomers that are hydrophobic.

Preferably the (meth)acrylate comprises hydrocarbo (meth)acrylate(s) and conveniently the hydrocarbo moiety may be C₁₋₂₀hydrocarbyl, more conveniently C₁₋₁₄alkyl most conveniently C₁₋₁₀alkyl, for example C₁₋₈alkyl.

Suitable (meth)acrylate(s) are selected from: methyl acrylate, methyl methacrylate, ethyl acrylate, isooctyl acrylate, 4-methyl-2-pentyl acrylate, 2-methylbutyl acrylate, isoamyl acrylate, sec-butyl acrylate, n-butyl acrylate, 2-ethylhexyl acrylate, isodecyl methacrylate, isononyl acrylate, isodecyl acrylate, and/or mixtures thereof, especially 2-ethylhexyl acrylate and/or butyl acrylate, for example n-butyl acrylate.

Preferably the arylalkylene monomer comprises (optionally hydrocarbo substituted) stryene and conveniently the optional hydrocarbo may be C₁₋₁₀hydrocarbyl, more conveniently C₁₋₄alkyl.

Suitable arylalkylene monomers are selected from: styrene, α-methyl styrene, vinyl toluene, t-butyl styrene, di-methyl styrene and/or mixtures thereof, especially styrene.

Component A-II may be present in the oligomer A in an amount from about 1% to about 97%, preferably from about 5% to about 90%, more preferably from about 20% to about 87%, most preferably from about 30% to about 85%, for example from about 50% to 70% by weight of the total weight of monomers used to prepare oligomer A.

All makes up difference AI and AIII important Component B-II may be present in the polymer B in an amount from about 1% to about 99%, preferably from about 5% to about 80%, more preferably from about 20% to about 70%, most preferably from about 30% to about 75%, for example from about 50% to 70% by weight of the total weight of monomers used to prepare the polymer B.

BII makes up difference BI important

### Component A-III (functional monomer) for Oligomer A

The term acid and/or anhydride functional monomer as used herein denotes monomers comprising at least one carboxylic acid group and/or anhydride group.

Preferred acid and/or anhydride functional monomers comprise, advantageously consist essentially of, at least one ethylenically unsaturated carboxylic acid and/or anhydride group. More preferred acids have one ethylenically unsaturated group and one or two carboxy and/or anhydride groups. Most preferably the acid or anhydride is selected from the group consisting of: acrylic acid (and oligomers thereof), beta carboxy ethyl acrylate (β-CEA), citraconic acid, crotonic acid, fumaric acid, itaconic acid, maleic acid, methacrylic acid and mixtures thereof; for example acrylic acid, methacrylic acid and mixtures thereof.

Component A-III may be present in the oligomer A in an amount from about 3% to about 50%, preferably from about 4% to about 40%, more preferably from about 5% to about 30%, most preferably from about 6% to about 15% by weight of the total weight of monomers used to prepare the oligomer A.

In another preferred embodiment of the present invention the particles may be oligomeric-polymeric particles, more preferably where at least some of said oligomer-polymeric particles have a core-shell structure and the oligomer component A substantially comprises the shell of said particles and the polymer component B substantially comprises the core of said particles.

### Oligomer A

Usefully the oligomer as used herein has a maximum weight average molecular weight (M_{w} measured by GPC as described herein of no more than 50 kilodaltons (kDa), more usefully ≤ 30 kDa, most usefully ≤ 20 kDa.

Conveniently oligomer A has a M_{w} from about 8 kDa to about 30 kDa, more conveniently from about 10 to about 20 kDa.

Optionally the amount of oligomer A in the binder is from about 10% to about 80%, more preferred from about 20% to about 50%, most preferred from about 25% to about 45%, for example about 33% by weight of total oligomer plus polymer in the binder.

### Polymer B

Usefully the polymer as used herein as a minimum weight average molecular weight (M_{w} measured by GPC as described herein) of at least 80 kilodaltons (kDa), more usefully ≥ 100 kDa, most usefully ≥ 120 kDa,

Optionally the amount of polymer B in the binder is from about 20% to about 90%, more optionally from about 50% to about 80% , most optionally from about 55% to about 75% for example about 67% by weight of total polymer plus polymer in the binder.

### Properties of oligomer A compared to polymer B

Usefully the modulus of the difference between the Tg of the oligomer (component A) and the polymer (component B) of the invention is at least 150°, more usefully 120°, most usefully 100°, for example 90°. The oligomer may have the greater Tg (hard section) and the polymer the lower Tg (soft section) or vice versa. More details of suitable oligomer / polymer properties that may be incorporated in binders of the invention are described in WO 95-29963 (hard oligomer / soft polymer) and WO 95-29944 (soft oligomer / hard polymer) and both documents are incorporated herein by reference.

Usefully in oligomer-polymer systems of the invention the oligomer system has the same or more preferably a higher Tg than the polymer system. Tg as described herein is calculated by the Fox equation.

Usefully in oligomer-polymer systems of the invention the pure polymer-oligomer binder (i.e. solvent free) has a minimum film forming temperature (MFT) of less than 30°C, more usefully less 25°C, most usefully less than 10°C.

Another embodiment of the binder of the present invention may be prepared as follows:
The embodiment is a waterborne acrylic oligomer/polymer system. In a first phase (Phase 1) the oligomer is polymerized at a pH < 5. Then ammonia or an organic amine-functional neutralizing agent is added to dissolve the oligomer. In a second phase (Phase 2) the polymer phase is polymerized in the presence of the alkaline dissolved oligomer phase.

Without wishing to be bound by any theory, it is believed that particles having a core -shell morphology are produced where the polymer phase substantially forms a core and the oligomer substantially forms a shell substantially surrounding the polymer core.

As used herein the term core-shell when referring to the morphology of a particle refers to particles in which at least two different domains can be identified, first forming a substantial part of the surface of the particle (denoted as the 'shell') which comprises a first material and a second which forms at least part of the interior of the particle (denoted as the 'core') and comprises a second material different from the first. The shell domain may not necessary comprise a contiguous and/or continuous region and may not wholly or even substantially enclose the core domain. So for example the term core-shell particle is used broadly to encompass such particle morphologies as raspberry or lobe shaped.

Many other variations embodiments of the invention will be apparent to those skilled in the art and such variations are contemplated within the broad scope of the present invention.

Further aspects of the invention and preferred features thereof are given in the claims herein.

The term "comprising" as used herein means that the list that immediately follows is non exhaustive and may or may not include any other additional suitable items, for example one or more further feature(s), component(s), ingredient(s) and/or substituent(s) as appropriate. "Substantially comprising" as used herein means a component or list of component(s) is present in a given material in an amount greater than or equal to about 90%, preferably ≥ 95%, more preferably ≥ 98% by weight of the total amount of the given material. The term "consisting of" as used herein mean that the list that follows is exhaustive and does not include additional items.

For all upper and lower boundaries of any parameters given herein, the boundary value is included in each range for each parameter. All combinations of minimum and maximum values of the parameters described herein may be used to define the parameter ranges for various embodiments and preferences of the invention.

It will be understood that the total sum of any quantities expressed herein as percentages cannot (allowing for rounding errors) exceed 100%. For example the sum of all components of which the composition of the invention (or part(s) thereof) comprises may, when expressed as a weight (or other) percentage of the composition (or the same part(s) thereof), total 100% allowing for rounding errors. However where a list of components is non exhaustive the sum of the percentage for each of such components may be less than / more than 100% to allow a certain percentage for additional amount(s) of any additional component(s) that may not be explicitly described herein.

For example the percentages described herein (whether as mole % or weight %) for the composition, polymer (s) and parts thereof (e.g. monomer(s)) relate to the percentage of the total amount of certain specified components (e.g. monomer(s)) from which the relevant polymer or part thereof is obtained and/or obtainable. In one (preferred) embodiment of the invention the components specified sum 100% (e.g. no other monomers or units derived therefrom, comprise the relevant composition, polymer or part thereof). However it will be appreciated that in another embodiment of the invention other components (e.g. monomers or units derived therefrom) in addition to those specified above may also comprises the relevant composition, polymer or part thereof so the components explicitly described herein would then add up to less than 100% of the relevant composition, polymer or part therein.

Unless the context clearly indicates otherwise, as used herein plural forms of the terms herein (for example composition, monomer and/or polymer) are to be construed as including the singular form and vice versa.

The synonymous terms 'organic substituent' and "organic group" as used herein (also abbreviated herein to "organo") denote any univalent or multivalent moiety (optionally attached to one or more other moieties) which comprises one or more carbon atoms and optionally one or more other heteroatoms. Organic groups may comprise organoheteryl groups (also known as organoelement groups) which comprise univalent groups containing carbon, which are thus organic, but which have their free valence at an atom other than carbon (for example organothio groups). Organic groups may alternatively or additionally comprise organyl groups which comprise any organic substituent group, regardless of functional type, having one free valence at a carbon atom. Organic groups may also comprise heterocyclyl groups which comprise univalent groups formed by removing a hydrogen atom from any ring atom of a heterocyclic compound: (a cyclic compound having as ring members atoms of at least two different elements, in this case one being carbon). Preferably the non carbon atoms in an organic group may be selected from: hydrogen, halo, phosphorus, nitrogen, oxygen, silicon and/or sulphur, more preferably from hydrogen, nitrogen, oxygen, phosphorus and/or sulphur.

Most preferred organic groups comprise one or more of the following carbon containing moieties: alkyl, alkoxy, alkanoyl, carboxy, carbonyl, formyl and/or combinations thereof; optionally in combination with one or more of the following heteroatom containing moieties: oxy, thio, sulphinyl, sulphonyl, amino, imino, nitrilo and/or combinations thereof. Organic groups include all chemically possible combinations in the same moiety of a plurality (preferably two) of the aforementioned carbon containing and/or heteroatom moieties (e.g. alkoxy and carbonyl if directly attached to each other represent an alkoxycarbonyl group).

The term 'hydrocarbo group' as used herein is a sub set of a organic group and denotes any univalent or multivalent moiety (optionally attached to one or more other moieties) which consists of one or more hydrogen atoms and one or more carbon atoms and may comprise one or more saturated, unsaturated and/or aromatic moieties. Hydrocarbo groups may comprise one or more of the following groups. Hydrocarbyl groups comprise univalent groups formed by removing a hydrogen atom from a hydrocarbon (for example alkyl). Hydrocarbylene groups comprise divalent groups formed by removing two hydrogen atoms from a hydrocarbon, the free valencies of which are not engaged in a double bond (for example alkylene). Hydrocarbylidene groups comprise divalent groups (which may be represented by "R₂C=") formed by removing two hydrogen atoms from the same carbon atom of a hydrocarbon, the free valencies of which are engaged in a double bond (for example alkylidene). Hydrocarbylidyne groups comprise trivalent groups (which may be represented by "RC≡"), formed by removing three hydrogen atoms from the same carbon atom of a hydrocarbon the free valencies of which are engaged in a triple bond (for example alkylidyne). Hydrocarbo groups may also comprise saturated carbon to carbon single bonds (e.g. in alkyl groups); unsaturated double and/or triple carbon to carbon bonds (e.g. in respectively alkenyl and alkynyl groups); aromatic groups (e.g. in aryl groups) and/or combinations thereof within the same moiety and where indicated may be substituted with other functional groups

The term 'alkyl' or its equivalent (e.g. 'alk') as used herein may be readily replaced, where appropriate and unless the context clearly indicates otherwise, by terms encompassing any other hydrocarbo group such as those described herein (e.g. comprising double bonds, triple bonds, aromatic moieties (such as respectively alkenyl, alkynyl and/or aryl) and/or combinations thereof (e.g. aralkyl) as well as any multivalent hydrocarbo species linking two or more moieties (such as bivalent hydrocarbylene radicals e.g. alkylene).

Any radical group or moiety mentioned herein (e.g. as a substituent) may be a multivalent or a monovalent radical unless otherwise stated or the context clearly indicates otherwise (e.g. a bivalent hydrocarbylene moiety linking two other moieties). However where indicated herein such monovalent or multivalent groups may still also comprise optional substituents. A group which comprises a chain of three or more atoms signifies a group in which the chain wholly or in part may be linear, branched and/or form a ring (including spiro and/or fused rings). The total number of certain atoms is specified for certain substituents for example C_{1-N} hydrocarbo, signifies a hydrocarbon moiety comprising from 1 to N carbon atoms. In any of the formulae herein if one or more substituents are not indicated as attached to any particular atom in a moiety (e.g. on a particular position along a chain and/or ring) the substituent may replace any H and/or may be located at any available position on the moiety which is chemically suitable and/or effective.

Preferably any of the hydrocarbo groups listed herein comprise from 1 to 36 carbon atoms, more preferably from 1 to 18. It is particularly preferred that the number of carbon atoms in an organo group is from 1 to 12, especially from 1 to 10 inclusive, for example from 1 to 4 carbon atoms.

As used herein chemical terms (other than IUAPC names for specifically identified compounds) which comprise features which are given in parentheses - such as (alkyl)acrylate, (meth)acrylate and/or (co)polymer denote that that part in parentheses is optional as the context dictates, so for example the term (meth)acrylate denotes both methacrylate and acrylate.

A polymer is a polydisperse mixture of macromolecules of large molecular weight (for example many thousands of Daltons) prepared by a polymerisation method, where the macromolecules comprises the multiple repetition of smaller units (which may themselves be monomers, oligomers and/or polymers) and where (unless properties are critically dependent on fine details of the molecular structure) the addition or removal one or a few of the units has a negligible effect on the properties of the macromolecule.

An oligomer is a polydisperse mixture of molecules having an intermediate molecular weight between a monomer and polymer.

Polymers of and/or used in the invention can be (co)polymerised by any suitable means of polymerisation well known to those skilled in the art. Examples of suitable methods comprise: thermal initiation; chemical initiation by adding suitable agents; catalysis; and/or initiation using an optional initiator followed by irradiation, for example with electromagnetic radiation (photo-chemical initiation) at a suitable wavelength such as UV; and/or with other types of radiation such as electron beams, alpha particles, neutrons and/or other particles.

The substituents on the repeating unit of a polymer and/or oligomer may be selected to improve the compatibility of the materials with the polymers and/or resins in which they may be formulated and/or incorporated for the uses described herein. Thus the size and length of the substituents may be selected to optimise the physical entanglement or interlocation with the resin or they may or may not comprise other reactive entities capable of chemically reacting and/or cross-linking with such other resins as appropriate.

### Standard conditions

As used herein, unless the context indicates otherwise, standard conditions (e.g. for drying a film) means a relative humidity of 50% ±5%, ambient temperature (23°C ±2°) and an air flow of less than or equal to (≤) 0.1m/s. 'Ambient temperature' (used synonymously with room temperature or RT) denotes 23°C ±2°.

### Molecular weight determination (weight average Mw)

The molecular weight is measured using Size Exclusion Chromatography (SEC) described as follows. SEC analysis may be performed on a Waters Alliance 2695 (equipped with a pump, degasser and autosampler) with a Shodex RI-101 differential refractive index detector and Shimadzu CTO-20AC column oven. The eluent is 1,1,1,3,3,3 hexafluoro isopropanol (HFIP) with the addition of 0.2M potassium trifluoro actetate (KTFA). The injection volume is 50µl. The flow is established at 0.8 ml/min. Two PSS PFG Linear XL columns (Polymer Standards Service) with a guard column (PFG PSS) are applied at a temperature of 40°C. The detection is performed with a differential refractive index detector. The sample solutions are prepared with a concentration of 5 mg solids in 2 ml HFIP (+ 0.2M KTFA), and the samples are dissolved for a period of 24 hours. Calibration is performed with eleven polymethyl methacrylate standards (polymer standard services), ranging from 500 to 2,000,000 gram/mol. The calculation is performed with Empower Pro software (Waters) with a third order calibration curve. The molar mass distribution is obtained via conventional calibration and the molar masses are polymethyl methacrylate equivalent molar masses (gram/mol).

### Glass transition temperature (Tg)

Tg values quoted herein are calculated using the well known Fox equation.

### Particle size

The particle sizes given herein are the size of a weight averaged particle and are quoted as a linear dimension which is a particle diameter as the particles can be considered to be essentially spherical. Weight average particle size may be measured using photon correlation spectroscopy.

Broadly the invention provides a process [optionally for preparing an oligomer-polymeric system (such as a polymeric binder for a printer ink for example as described herein)] the process comprising the steps of
A) forming a oligomer by polymerising (optionally by an emulsion polymerisation):
   i) optionally and independently at least one ureido functional moiety of Formula 1 as described in claim 1, (Component A-I), further optionally in an amount of greater than or equal to 0.01 %;
   ii) optionally at least one other ethylenically unsaturated monomer (Component A-II), in an amount of less than or equal to 96.99%;
   iii) at least one acid and/or anhydride functional ethylenically unsaturated monomer other than Components A-I to A-II (Component A-III) in an amount of greater than or equal to 3%;
      where all amounts of Components A-I to A-III are percentages by weight of the total amount of monomer used to prepare oligomer A and do not total more than 100%;
      in the presence of
   iv) at least one agent to control molecular weight, optionally in an amount of at least about 0.01 % by weight of total monomer used to prepare the oligomer; and/or
   v) at least one surfactant; optionally where the surface active agent is present in an amount of at least about 0.01 % by weight of total monomer used to prepare the oligomer ; and
      and then in the presence of the oligomer from step A
B) forming a polymer by polymerising:
   i) optionally and independently at least one ureido functional moiety of Formula 1 (as described for Component A-I but independent thereof) (Component B-I), further optionally in an amount of greater than or equal to 0.01%; and
   ii) optionally at least one other ethylenically unsaturated monomer

(Component B-II), further in an amount of less than or equal to 100%; where all amounts of Components B-I to B-II are percentages by weight of the total amount of the moieties used to prepare polymer B and do not total more than 100%; where at least one of the optional ureido components (A-I and B-I) are present.

Optionally the product of the process of the invention comprises oligomeric-polymeric particles which preferably have a core shell structure where the oligomer from step A, substantially comprises the shell and the polymer from step B substantially comprises the core.

One aspect of the invention provides an oligomer-polymer system obtained and/or obtainable by a process of the invention.

A further aspect of the invention provides an ink comprising a binder of the invention and/or a binder obtained and/or obtainable by a process of the invention, together with a pigment and optionally a diluent

A still further aspect of the invention provides a coating comprising a oligomer-polymer system obtained and/or obtainable by a process of the invention.

Another aspect of the invention provides a substrate coated with a coating of the invention.

A still another aspect of the invention provides a substrate printed with an ink of the invention.

The substrate may be glass, wood, plastic, paper, metal, paper (e.g. a paper web) and/or film (e.g. a film web). Preferred substrates are polymeric such as polyolefins and polyester.

A still other aspect of the invention provides a method of coating a substrate comprising the steps of i) applying a coating composition of the invention to the substrate; ii) drying the substrate to form a coating thereon.

A yet still other aspect of the invention provides a method of printing a substrate comprising the steps of i) printing an ink of the invention onto the substrate; and ii) drying the substrate to form a printed image thereon. The printing method may be any suitable such as: ink-jet, flexographic, reprographic, gravure and/or screen printing.

Yet another aspect of the invention provides a method of manufacture of an oligomer- polymer system and/or binder of the invention for the purpose of obtaining a printing ink.

A still yet other aspect of the invention provides a method of manufacture of an oligomer- polymer system of the invention, binder, ink and/or a coating composition (all denoted as 'material') for the purpose of obtaining compositions having chemical resistance.

Preferred chemical resistance for inks of the invention may satisfy one or more of the following conditions:
a) a Satra wet rub resistance of at least 50%, more preferably at least 60% and most preferably at least 70% (i.e. using a Satra Rub tester STM 462 with felt pads after 50 rotations, as described herein, where the percentage denotes the amount by weight of ink that remains on the substrate);
b) a Satra sunflower oil rub resistance (after 500 rotations) of at least 70%, more preferably at least 80% and most preferably at least 90% and/or
c) at least 100 rubs (preferably 200, more preferably 500 rubs, most preferably 1000 rubs) of ethanol (in the test described herein) are required to completely remove the ink when applied to a substrate.

Another aspect of the invention provides use of an ureido functional moiety in a method of manufacture of an oligomer-polymer system and/or binder for the purpose of obtaining a binder for a printing ink.

Broadly another aspect of the invention provides for use of a ureido functional moiety in a manufacture of oligomer- polymer system, binder, ink and/or a coating composition (all denoted as 'material') for the purpose of achieving chemical resistance (for example by satisfying one or more of the conditions defined herein).

Many other variations and/or embodiments of the invention will be apparent to those skilled in the art and such variations are contemplated within the broad scope of the present invention.

Further aspects of the invention and preferred features thereof are given in the claims herein.

### EXAMPLES

The present invention is now illustrated by reference to the following non-limiting examples. Unless otherwise specified, all parts, percentages and ratios are on a weight basis. The prefix 'Comp' before an example denotes that it is comparative. The term "working" means that the example is according to the invention. The term "non working" means that it is not according to the invention (i.e. comparative).

The following abbreviations are used:
AP denotes ammonium persulfate
BA denotes n-butyl acrylate
DDM denotes dodecyl mercaptane (chain transfer agent)
DM denotes demineralized water
Flexiverse BFD1531 is an ink pigment available commercially under this trade name from Sun Chemicals
IAA denotes iso-ascorbic acid
MAA denotes methacrylic acid
MEEU denotes N-(2-methylacryloyloxyethyl) ethylene urea
MFT denotes minimum film forming temperature
MMA denotes methyl methacrylate
Mw denotes a weight average molecular weight
RT denotes room temperature (also used interchangeably with ambient temperature).
SA denotes stoichiometric amount
SLS denotes sodium lauryl sulfate (emulsifying agent)
s/s % denotes percentage by weight of solids of ingredient per weight of total solids
t-BHPO denotes t-butylhydroperoxide
TM denotes total monomer

Recipes and procedures for the preparation of an aqueous solution of various oligomers for use in the invention is described below with reference to the tables which set out the amounts of the ingredients used to prepare each example.

### Example 1

An acid-functional oligomer is prepared as described below:

**Table 1**

| label | Ingredient | Amount (g) |
|---|---|---|
| '1' | DM | 1338.14 |
| '2' | SLS (30% in DM) | 9.78 |
| '3' | AP (10.13% s/s in DM) | 8.59 |
| '4' | AP (1.37% s/s in DM) | 182.41 |
| '5' | DM | 237.11 |
| '6' | SLS (30% in DM) | 33.74 |
| '7' | MAA | 64.92 |
| '8' | MMA | 454.44 |
| '9' | BA | 97.38 |
| '10' | MEEU (50% in DM) | 64.92 |
| '11' | DDM | 28.11 |
| '12' | DM | 13.04 |
| '13' | NH₃ (25% in DM) | 51.30 |
| '14' | DM | 51.30 |

### Notes

Monomer composition (weight ratio): MAA / MMA / BA / MEEU = 10 / 70/15/5
SLS (30% in DM) is used in an amount 2.0% of TM s/s (22.5% in the Reactor; 77.5% in the Feeder).

AP is used in an amount 0.52 % of TM (s/s) added as a shot and as a separate feed during the emulsion polymerization (25.8% in shot 74.2% in feed; solids in shot: 10.13% and solids in feed: 1.37% in DM).
DDM is used in an amount of 4.33% of TM
Neutralization of final product: 1 SA with NH₃

### Method (with reference to labels in Table 1)

Ingredients '1' and '2' are added to a reactor vessel (Reactor) which is heated to 80°C. A monomer feed (ingredients '5' to '11' [Monomer]) is mixed in a feed tank (Feeder). A proportion (5% by weight TM) of Monomer is fed to the Reactor at 80°C. The Reactor contents are mixed for 5 minutes and than ingredient '3' is added. After 5 minutes the Monomer and an initiator (ingredient '4') are both fed together into the Reactor over 65 minutes. The reaction temperature is 85°C ± 2°C. The Feeder is washed with ingredient '12' and the resultant washings are mixed into the Reactor for 15 minutes at 85°C ± 2°C to obtain a white, low viscosity oligomer dispersion. A solution of ingredients '13' and '14' is then added to the Reactor over 15 minutes. The Reactor is held at 85 °C for another 20 minutes after which the oligomer dispersion slowly changes into a clear, low viscosity solution which is cooled to RT to obtain a product characterized as follows:
solids = 26.5 %, pH (at 25°C) = 8.4, Mw = 13 kilodaltons.

### Example 2

A polymer-oligomer mixture of the invention (Example 2) is prepared as described below:

**Table 2**

| label | Ingredient | Amount (g) |
|---|---|---|
| '1' | Solution of oligomer from Ex 1 | 576.23 |
| '2' | BA | 138.23 |
| '3' | MMA | 57.60 |
| '4' | MEEU (50% in DM) | 43.52 |
| '5' | t-BHPO 70% (13.5% in DM) | 1.48 |
| '6' | IAA (5.50% in DM) | 3.64 |
| '7' | DM | 3.96 |
| '8' | DM | 20.70 |

| | | |
|---|---|---|
| Notes Oligomer composition (as Example 1) Polymer composition (weight ratio): MMA / BA / MEEU = 26.5 / 63.5 / 10 Tg of polymer (calculated) = -18°C Oligomer/polymer (s/s on TM): 66.67 / 100 (= 40/60) IAA is used in an amount 0.11 % of TM (s/s) in 4 identical shots (5.50 % solids) t-BHPO is used in an amount 0.08 % of TM (s/s) in 4 identical shots (9.46 % solids) | | |

### Method (with reference to labels in Table 2)

Ingredient '1' is added to a reactor vessel (Reactor) which is heated to 60°C. In a separate vessel the pH of ingredient '6' is adjusted to 8 - 9 with ammonia for use in the next step.

### Monomer Feed- step A

A proportion (one third by weight TM) of ingredients '2' to '4' [Monomer] is fed from a monomer feed tank (Feeder) to the Reactor at 60°C over 5 minutes. The Reactor contents are mixed for 15 minutes and then 25% of ingredient '5' is added followed by 25% of (pH adjusted) ingredient '6'. Within 5 minutes the Reactor contents reach a peak temperature of approx 86 °C and the temperature is allowed to drift for a further 10 minutes. Ingredient '8' is then added and the Reactor is cooled to 60°C.

Step A is repeated twice more (omitting ingredient '8') and on the final (third) time, the Feeder is washed with ingredient '7' and the resultant washings are mixed into the Reactor over 15 minutes. After the final repeat the Reactor is cooled to 65°C and the remaining ingredient '5' (25%) is added followed by the remaining (pH adjusted) ingredient '6' (25%). The Reactor contents are mixed for 5 minutes then cooled to RT to obtain a product characterized as follows:
solids = 43.9 %, pH (at 25°C) = 8.4,Viscosity =200 mPa.s, Particle size 66 nm, MFT < 0°C

### Comp A

An acid-functional (non ureido) oligomer is prepared as described below:

**Table 3**

| label | Ingredient | Amount (g) |
|---|---|---|
| '1' | DM | 1313.85 |
| '2' | SLS (30% in DM) | 9.60 |
| '3' | AP (10.1% s/s in DM) | 8.44 |
| '4' | AP (1.37% s/s in DM) | 179.10 |
| '5' | DM | 264.67 |
| '6' | SLS (30% in DM) | 33.12 |
| '7' | MAA | 63.74 |
| '8' | MMA | 478.06 |
| '9' | BA | 95.61 |
| '10' | DDM | 17.85 |
| '11' | DM | 12.80 |
| '12' | NH₃ (25% in DM) | 50.37 |
| '13' | DM | 50.37 |

| | | |
|---|---|---|
| Notes Monomer composition (weight ratio): MAA / MMA / BA = 10 / 75 / 15 DDM is used in an amount of 2.8% of total monomers. Other notes same as Example 1 | | |

### Method (with reference to labels in Table 3)

The Method is the same as described for Example 1 except the monomer feed (ingredients '5' to '9' in Table 3 = Monomer) consists of one less monomer so the subsequent ingredients are renumbered (i.e. '10' to '13' in Comp A correspond to '11' to "14' in Ex 1).

The product is characterized as follows:
solids = 25.9 %, pH (at 25°C) = 8.5, Mw = 15 kilodaltons.

### Comp B

An comparative polymer (Comp B) is prepared as described below:

**Table 4**

| label | Ingredient | Amount (g) |
|---|---|---|
| '1' | Solution of oligomer from Comp A | 589.59 |
| '2' | BA | 143.59 |
| '3' | MMA | 74.00 |
| '4' | t-BHPO 70% (13.5% in DM) | 1.48 |
| '5' | IAA (5.50% in DM) | 3.64 |
| '6' | DM | 41.70 |

| | | |
|---|---|---|
| Notes Oligomer composition (as Comp A) Polymer composition (weight ratio): MMA / BA = 34 / 66 Other notes same as Example 2 | | |

### Method (with reference to labels in Table 4)

The Method is the same as described for Example 2 except the monomer feed (ingredients '2' to '3' in Table 4 = Monomer) consists of one less monomer so the subsequent ingredients in Table 4 are renumbered (i.e. '4' to '6' in Comp A correspond to '5' to '7' in Example 1). Also ingredient '8' from Example 2 (extra DM) is omitted. The product is characterized as follows:
solids = 43.4 %, pH (at 25°C) = 8.3, viscosity = 50 mPa.s, particle size 57 nm, MFT 5°C Inks

The polymers prepared in Examples 2 and Comp B were formulated into inks as shown in Table 5:

**Table 5 - inks**

| Component | Example 3 (wt%) | Comp C (wt%) |
|---|---|---|
| Ex 2 | 64.2 | - |
| Comp B | - | 67.6 |
| Pigment concentrate | 29.9 | 29.9 |
| NH₃ (25% in DM) | 0.3 | 0.3 |
| DM | 5.6 | 2.2 |

| | | |
|---|---|---|
| Pigment concentrate = a resin supported copper phtalocyanine blue pigment concentrate. | | |

The characteristics of the wet inks are as follows:
Example 3 solids = 28.2%, pH (at 25°C) = 8.8, viscosity = 85 mPa.s (Brookfield)
Comp C solids = 29.3%, pH (at 25°C) = 8.9, viscosity = 90 mPa.s (Brookfield)

The inks were applied on a 60 micron corona treated polyethylene (PE) substrate with a 6 um wire bar to determine the chemical and physical end properties. The coated substrate is dried for 10 seconds at 80°C and subsequently stored at room temperature for 16 hours. The surface tension of the substrate varies between 40 and 42 mN/m. To determine the printability properties of the ink (wetting and transfer), the ink is applied on the PE substrate using a flexographic hand roller with a 140/10 Anilox.

### Testing of inks

### Printability properties

A couple of droplets of the ink are placed between the rubber roll and the chosen (anilox) cylinder in a control coater. The coater is used to apply the ink to the substrate at the same selected speed (preferably high speed) and high pressure for each sample in a series of samples to be compared. The rheology, wetting behaviour and transfer properties of the dry ink layer are determined by visually inspecting the ink and are rated using a 1 to 5 rating scale (where 1 is the worse and 5 the best performance).

Rheology is a measure of the flow behaviour of the ink, which is good if the ink layer has a smooth colour distribution and structure.

Wetting behaviour relates to rheology but also the ability of an ink to wet on a critical film substrate with a low surface tension.

Transfer means the degree to which ink transfers from the anilox cylinder to the rubber roll, which applies the ink onto the substrate. For inks with equal amounts of pigment, the dry ink layer having the highest colour-strength shows the best transfer performance.

### Reversibility

The ink is applied to a polyethylene substrate using a 6 um wire bar and dried for 1 hour at ambient temperature to form a layer of ink thereon. A further drop of the same ink is placed onto the film of dried ink. After a set time (e.g. 10 seconds) the ink drop is removed with a water-wetted tissue. If necessary the test is repeated and the delay after which the tissue is applied is increased until the ink drop cannot be removed (i.e. the ink drop has completely redissolved in the ink film). The reversibility of an ink is deemed acceptable when the time for the ink taken to redissolve completely is between 15 - 20 seconds..

### Adhesion

A strip of adhesive tape (Scapa tape Red 1112) is applied onto the printed substrate pressed in place thoroughly by hand. The adhesive tape is removed by hand and the damage to the coating is assessed

### Blocking resistance

The block resistance is determined with a Koehler Block tester (Instrument Company Inc.) directly after drying 10 seconds at 80°C. A 30 x 100 mm piece of the printed substrate is cut and folded twice to be able to test lacquer against lacquer (I/I) and lacquer against back side (I/b). The block test is executed at a pressure of 1 kg/cm², a temperature of 52°C for 16 hours. The test substrate is taken out of the block tester, conditioned at room temperature for one hour and the damage to the coating is assessed.

### Wet Wrinkle

The coated substrate is folded breadthways (accordion-wise) at least five times. The folded part is then wrinkled for 10 seconds with both hands under cold water. After patting the water carefully away with a towel, to the coating is assessed.

### Chemical resistance

### 1) Satra rub tests

Satra rub resistance is tested using a Satra Rub tester STM 462 with felt pads with a chosen amount of rotations. The felt pads used for the water test are soaked in water. Four droplets of sun flower oil are dropped on the felt pad for the oil test and the damage to the coating is assessed.

### 2) Hand rubs

A small piece of tissue is soaked with the test liquid (e.g. ethanol or sodium hydroxide). The coated substrate is rubbed with the tissue for a predefined number of times and the damage to the coating is assessed.

### Damage assessment

Where indicated in some of the above tests, the performance of the ink can be assessed by assessing the damage to the coating (i.e. the ink layer). Damage is preferably assessed either by measuring the weight percentage of the ink left on the substrate after the test (e.g. as given in Table 6 below) but the ink can also be evaluated visually using the rating scale below where 5 is the best and 1 is the worse:
5 = very good: no visible damage or degradation / discoloration;
4 = only slight visible damage or haze / blooming;
3 = clear damage or haze / blooming;
2 = coating partially dissolved / damaged;
1 = very poor; coating is completely dissolved / damaged

### Results

The test results are shown in Table 6

**Table 6 - Test results**

| Properties on white PE substrate | Ex 3 | Comp C |
|---|---|---|
| Rheology | 4-5 | 4-5 |
| Wetting | 4-5 | 4-5 |
| Transfer | 4-5 | 4-5 |
| Reversibility (sec) | 5 sec | 10 sec |
| Adhesion (%) | 98% | 98% |
| Block resistance (I/I, I/b) | 80%/85% | 80%/85% |
| Wet wrinkle | 85% | 15% |
| Satra wet rubs - 50 rotations | 80% | 0% |
| Satra sun flower oil rubs - 500 rotations | 95% | 95% |
| Ethanol (50%) 50 double rubs | 85% | 0% |
| NaOH (1%) 15 double rubs | 45% | 0% |

Surprisingly the data shows that inks of the present invention (obtained from oligomer-polymers binders of the present invention) have improved chemical resistance compared to similar prior art inks and yet inks of the present invention retain or even improve their printability.

## Claims

1. A polymeric binder for a printer ink, the binder comprising particles in which:
A) one part and/or set of said particles is substantially oligomeric having a maximum weight average molecular weight, M_{w} as measured by GPC as described in the description of no more than 50 kilodaltons (kDa), and is obtained and/or obtainable from polymerisation of:
i) optionally and independently at least one ureido functional moiety of Formula 1 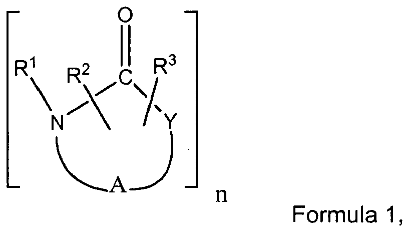 where
Y denotes an electronegative group,
R¹ is H, OH or an optionally hydroxyl substituted C₁₋₁₀hydrocarbo;
R² is H or a C₁₋₁₀hydrocarbo;
R³ is H or a C₁₋₁₀hydrocarbo substituted by at least one ethylenically unsaturated moiety; and
either
A represents a divalent organo moiety attached to both the -NR¹- and-Y- moieties so the -A-, -NR⁰-, -C(=O)- and -Y- moieties together represent a ring having from 4 to 8 ring atoms, and R² and R³ are attached to any suitable moiety on the ring;
or
A is not present, i.e. Formula 1 represents a linear and/or branched moiety that does not comprise a heterocyclic ring, in which case R² and R³ are attached to the R¹ moiety;
n is an integer from 1 to 4; and
where Formula 1 comprises at least one ethylenically unsaturated moiety; in an amount of greater than or equal to 0.01 %;
ii) at least one other ethylenically unsaturated monomer (Component A-II), in an amount of less than or equal to 96.99%;
iii) at least one acid and/or anhydride functional ethylenically unsaturated monomer other than Components A-I to A-II (Component A-III) in an amount of greater than or equal to 3%;
where all amounts of Components A-I to A-IIII are percentages by weight of the total amount of moieties used to prepare the oligomer and do not total more than 100%; and
B) another part and/or set of said particles is substantially polymeric having a minimum weight average molecular weight, M_{w} as measured by GPC as described in the description of at least 80 kilodaltons (kDa), and is obtained or obtainable from polymerisation of:
i) optionally and independently at least one ureido functional moiety of Formula 1 as described in Component A-I but independent thereof (Component B-I), further optionally in an amount of greater than or equal to 0.01%; and
ii) at least one other ethylenically unsaturated monomer (Component B-II), further in an amount of less than or equal to 100%;
where all amounts of Components B-I to B-II are percentages by weight of the total amount of the moieties used to prepare polymer B and do not total more than 100%;
where at least one of the optional ureido components (A-I and B-I) are present.

2. A process for preparing an oligomer-polymeric system as a binder for a printer ink the process comprising the steps of
A) forming a oligomer by polymerising optionally by an emulsion polymerisation:
i) optionally at least one ureido functional moiety of Formula 1 as described in claim 1, (Component A-I) (Component B-I), further optionally in an amount of greater than or equal to 0.01 %;
ii) optionally at least one other ethylenically unsaturated monomer (Component A-II), in an amount of less than or equal to 96.99%;
iii) at least one acid and/or anhydride functional ethylenically unsaturated monomer other than Components A-I to A-II (Component A-III) in an amount of greater than or equal to 3%;
where all amounts of Components A-I to A-III are percentages by weight of the total amount of monomer used to prepare oligomer A and do not total more than 100%;
in the presence of
iv) at least one agent to control molecular weight, optionally in an amount of at least about 0.01 % by weight of total monomer used to prepare the oligomer; and/or
v) at least one surfactant; optionally where the surface active agent is present in an amount of at least about 0.01 % by weight of total monomer used to prepare the oligomer ; and
and then in the presence of the oligomer from step A
B) forming a polymer by polymerising:
i) optionally at least one ureido functional moiety of Formula 1 (as described herein, Component B-I), further optionally in an amount of greater than or equal to 0.01 %; and
ii) optionally at least one other ethylenically unsaturated monomer (Component B-II), further in an amount of less than or equal to 100%;
where all amounts of Components B-I to B-II are percentages by weight of the total amount of the moieties used to prepare polymer B and do not total more than 100%;
where at least one of the optional ureido components (A-I and B-I) are present.

3. An oligomer-polymer system obtained and/or obtainable by a process as claimed in claim 2.

4. An ink comprising a binder as claimed in claim 1 and/or an oligomer-polymer system as claimed in claim 3, together with a pigment and optionally a diluent.

5. A substrate printed with an ink as claimed in claim 4.

6. A method of printing a substrate comprising the steps of:
i) printing an ink as claimed in claim 4 onto the substrate; and
ii) drying the substrate to form a printed image thereon.

7. A method of manufacture of a binder as claimed in claim 1 and/or an oligomer-polymer system as claimed in claim 3 for the purpose of obtaining a printing ink.

8. A method as claimed in claim 7 for the purpose of obtaining inks having chemical resistance as measured by Satra wet rub resistance after 50 rotations of at least 50%.

9. Use of a ureido functional moiety of Formula 1 as represented in claim 1 in a method of manufacture of an oligomer- polymer system and/or binder for the purpose of obtaining a binder for a printing ink.

10. Use as claimed in claim 9 for the purpose of achieving chemical resistance as measured by Satra wet rub resistance after 50 rotations of at least 50%.

## Patentansprüche

1. Polymeres Bindemittel für eine Druckfarbe, wobei das Bindemittel Teilchen umfasst, wobei:
A) ein Teil und/oder Satz der Teilchen weitgehend oligomer mit einem maximalen durch GPC wie in der Beschreibung beschrieben gemessenen gewichtsmittleren Molekulargewicht von höchstens 50 Kilodalton (kDa) ist und aus der Polymerisation von:
i) gegebenenfalls sind unabhängig mindestens einer ureidofunktionellen Einheit der Formel 1 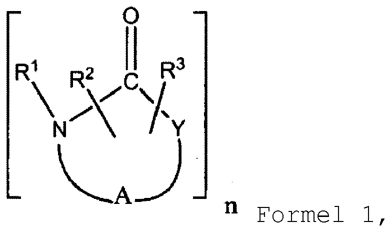 wobei
Y für eine elektronegative Gruppe steht, R¹ für H, OH oder ein gegebenenfalls hydroxylsubstituiertes C₁-C₁₀-Hydrocarbo steht;
R² für H oder ein C₁-C₁₀-Hydrocarbo steht; R³ für H oder ein durch mindestens eine ethylenisch ungesättigte Einheit substituiertes C₁-C₁₀-Hydrocarbo steht; und entweder
A für eine zweiwertige Organo-Einheit steht, die sowohl an die -NR¹-Einheit als auch an die -Y-Einheit gebunden ist, so dass die -A-, -NR⁰-, -C(=O)- und -Y-Einheiten zusammen für einen Ring mit 4 bis 8 Ringatomen stehen und R² und R³ an eine geeignete Einheit an dem Ring gebunden sind;
oder
A nicht vorliegt, d.h. Formel 1 für eine lineare und/oder verzweigte Einheit steht, die keinen heterocyclischen Ring umfasst, wobei in diesem Fall R² und R³ an die R¹-Einheit gebunden sind;
n für eine ganze Zahl von 1 bis 4 steht; und
wobei Formel 1 mindestens eine ethylenisch ungesättigte Einheit umfasst;
in einer Menge größer gleich 0,01%;
ii) mindestens einem anderen ethylenisch ungesättigten Monomer (Komponente A-II) in einer Menge kleiner gleich 96,99%;
iii) mindestens einem säure- und/oder anhydridfunktionellen ethylenisch ungesättigten Monomer, das von den Komponenten A-I bis A-II verschieden ist (Komponente A-III), in einer Menge größer gleich 3%
erhalten wird und/oder erhältlich ist;
wobei alle Mengen der Komponenten A-I bis A-III Gewichtsprozentanteile der Gesamtmenge der zur Herstellung des Oligomers verwendeten Einheiten sind und sich nicht auf mehr als 100% summieren; und
B) ein anderer Teil und/oder Satz der Teilchen weitgehend polymer mit einem minimalen durch GPC wie in der Beschreibung beschrieben gemessenen gewichtsmittleren Molekulargewicht von mindestens 80 Kilodalton (kDa) ist und aus der Polymerisation von:
i) gegebenenfalls sind unabhängig mindestens einer ureidofunktionellen Einheit der Formel 1 wie in Komponente A-I beschrieben, aber unabhängig davon (Komponente B-I), ferner gegebenenfalls in einer Menge größer gleich 0,01%; und
ii) mindestens einem anderen ethylenisch ungesättigten Monomer (Komponente B-II), ferner in einer Menge kleiner gleich 100%;
erhalten wird oder erhältlich ist;
wobei alle Mengen der Komponenten B-I bis B-II Gewichtsprozentanteile der Gesamtmenge der zur Herstellung des Polymers B verwendeten Einheiten sind und sich nicht auf mehr als 100% summieren;
wobei mindestens eine der fakultativen Ureidokomponenten (A-I und B-I) vorliegt.

2. Verfahren zur Herstellung eines oligomer-polymeren Systems als Bindemittel für eine Druckfarbe, wobei das Verfahren folgende Schritte umfasst:
A) Bilden eines Oligomers durch Polymerisation, gegebenenfalls durch eine Emulsionspolymerisation, von:
i) gegebenenfalls mindestens einer ureidofunktionellen Einheit der Formel 1 wie in Anspruch 1 beschrieben (Komponente A-I) (Komponente B-I), ferner gegebenenfalls in einer Menge größer gleich 0, 01%;
ii) mindestens einem anderen ethylenisch ungesättigten Monomer (Komponente A-II) in einer Menge kleiner gleich 96,99%;
iii) mindestens einem säure- und/oder anhydridfunktionellen ethylenisch ungesättigten Monomer, das von den Komponenten A-I bis A-II verschieden ist (Komponente A-III), in einer Menge größer gleich 3%;
wobei alle Mengen der Komponenten A-I bis A-III Gewichtsprozentanteile der Gesamtmenge der zur Herstellung des Oligomers A verwendeten Einheiten sind und sich nicht auf mehr als 100% summieren;
in Gegenwart von
iv) mindestens einem Mittel zur Regulierung des Molekulargewichts, gegebenenfalls in einer Menge von mindestens etwa 0,01 Gew.-%, bezogen auf das gesamte zur Herstellung des Oligomers verwendete Monomer; und/oder
v) mindestens einem Tensid; wobei das oberflächenaktive Mittel gegebenenfalls in einer Menge von mindestens etwa 0,01 Gew.-%, bezogen auf das gesamte zur Herstellung des Oligomers verwendete Monomer, vorliegt; und
unter der in Gegenwart des Oligomers aus Schritt A
B) Bilden eines Polymers durch Polymerisation von:
i) gegebenenfalls mindestens einer ureidofunktionellen Einheit der Formel 1 (wie hier beschrieben, Komponente B-I), ferner gegebenenfalls in einer Menge größer gleich 0,01%; und
ii) mindestens einem anderen ethylenisch ungesättigten Monomer (Komponente B-II), ferner in einer Menge kleiner gleich 100%;
wobei alle Mengen der Komponenten B-I bis B-II Gewichtsprozentanteile der Gesamtmenge der zur Herstellung des Polymers B verwendeten Einheiten sind und sich nicht auf mehr als 100% summieren;
wobei mindestens eine der fakultativen Ureidokomponenten (A-I und B-I) vorliegt.

3. Oligomer-Polymer-System, erhalten und/oder erhältlich durch ein Verfahren nach Anspruch 2.

4. Druckfarbe, umfassend ein Bindemittel nach Anspruch 1 und/oder ein Oligomer-Polymer-System nach Anspruch 3 zusammen mit einem Pigment und gegebenenfalls einem Verdünnungsmittel.

5. Substrat, bedruckt mit einer Druckfarbe nach Anspruch 4.

6. Verfahren zum Bedrucken eines Substrats, dass folgende Schritte umfasst:
i) Bedrucken des Substrats mit einer Druckfarbe nach Anspruch 4; und
ii) Trocknen des Substrats zur Bildung eines gedruckten Bilds darauf.

7. Verfahren zur Herstellung eines Bindemittels nach Anspruch 1 und/oder eines Oligomer-Polymer-Systems nach Anspruch 3 zum Zweck des Erhalts einer Druckfarbe.

8. Verfahren nach Anspruch 7 zum Zweck des Erhalts von Druckfarben mit einer durch Satra-Nassreibfestigkeit nach 50 Rotationen gemessenen Chemikalienbeständigkeit von mindestens 50%.

9. Verwendung einer ureidofunktionellen Einheit der Formel 1 gemäß Anspruch 1 in einem Verfahren zur Herstellung eines Oligomer-Polymer-Systems und/oder Bindemittels zum Zweck des Erhalts eines Bindemittels für eine Druckfarbe.

10. Verwendung nach Anspruch 9 zum Zweck der Erzielung einer durch Satra-Nassreibfestigkeit nach 50 Rotationen gemessenen Chemikalienbeständigkeit von mindestens 50%.

## Revendications

1. Liant polymère pour une encre pour imprimante, le liant comprenant des particules dans lesquelles :
A) une partie et/ou un ensemble desdites particules est sensiblement oligomère, ayant un poids moléculaire moyen en poids maximal, M_{w}, tel que mesuré par CPG comme décrit dans la description, ne dépassant pas 50 kilodaltons (kDa), et est et/ou peut être obtenu à partir de la polymérisation de :
i) éventuellement et indépendamment au moins un groupe fonctionnel uréido de formule 1 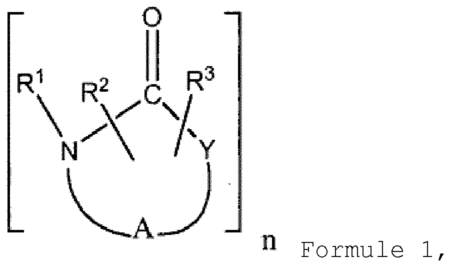 où
Y désigne un groupe électronégatif,
R¹ est H, OH ou un hydrocarbure en C₁₋₁₀ éventuellement hydroxysubstitué ;
R² est H ou un hydrocarbure en C₁₋₁₀ ;
R³ est H ou un hydrocarbure en C₁₋₁₀ substitué par au moins une fraction éthyléniquement insaturée ; et
soit
A représente une fraction organique divalente attachée à la fois aux fractions -NR¹- et -Y- de telle sorte que les fractions -A-, -NR⁰-, -C(=O)- et -Y- représentent ensemble un cycle ayant de 4 à 8 atomes cycliques, et R² et R³ sont attachés à n'importe quelle fraction appropriée sur le cycle ;
soit
A n'est pas présent, autrement dit la formule 1 représente une fraction linéaire et/ou ramifiée qui ne comprend pas d'hétérocycle, auquel cas R² et R³ sont attachés à la fraction R¹ ;
n est un entier de 1 à 4 ; et
où la formule 1 comprend au moins une fraction éthyléniquement insaturée ;
dans une quantité supérieure ou égale à 0,01 % ;
ii) au moins un autre monomère éthyléniquement insaturé (composant A-II), dans une quantité inférieure ou égale à 96,99 % ;
iii) au moins un monomère éthyléniquement insaturé à fonction acide et/ou anhydride différent des composants A-I et A-II (composant A-III) dans une quantité supérieure ou égale à 3 % ;
où toutes les quantités des composants A-I à A-III sont des pourcentages en poids de la quantité totale de fractions utilisées pour préparer l'oligomère et ne s'élèvent pas au total à plus de 100 % ; et
B) une autre partie et/ou un autre ensemble desdites particules est sensiblement polymère, ayant un poids moléculaire moyen en poids minimal, M_{w}, tel que mesuré par CPG comme décrit dans la description, d'au moins 80 kilodaltons (kDa), et est ou peut être obtenu à partir de la polymérisation de :
i) éventuellement et indépendamment au moins un groupe fonctionnel uréido de formule 1 telle que décrite pour le composant A-I, mais indépendamment de celui-ci (composant B-I), en outre éventuellement dans une quantité supérieure ou égale à 0,01 % ; et
ii) au moins un autre monomère éthyléniquement insaturé (composant B-II), en outre dans une quantité inférieure ou égale à 100 % ;
où toutes les quantités des composants B-I et B-II sont des pourcentages en poids de la quantité totale des fractions utilisées pour préparer le polymère B et ne s'élèvent pas au total à plus de 100 % ;
où l'un au moins des composants uréido facultatifs (A-I et B-I) est présent.

2. Procédé de préparation d'un système oligomère-polymère en tant que liant pour une encre pour imprimante, le procédé comprenant les étapes consistant à
A) former un oligomère en polymérisant éventuellement par une polymérisation en émulsion :
i) éventuellement au moins un groupe fonctionnel uréido de formule 1 telle que décrite dans la revendication 1 (composant A-I) (composant B-I), en outre éventuellement dans une quantité supérieure ou égale à 0,01 % ;
ii) éventuellement au moins un autre monomère éthyléniquement insaturé (composant A-II), dans une quantité inférieure ou égale à 96,99 % ;
iii) au moins un monomère éthyléniquement insaturé à fonction acide et/ou anhydride différent des composants A-I et A-II (composant A-III) dans une quantité supérieure ou égale à 3 % ;
où toutes les quantités des composants A-I à A-III sont des pourcentages en poids de la quantité totale de monomères utilisés pour préparer l'oligomère A et ne s'élèvent pas au total à plus de 100 % ;
en présence de
iv) au moins un agent de contrôle du poids moléculaire, éventuellement dans une quantité d'au moins environ 0,01 % en poids du total de monomères utilisés pour préparer l'oligomère ; et/ou
v) au moins un tensioactif, le tensioactif étant éventuellement présent dans une quantité d'au moins environ 0,01 % en poids du total de monomères utilisés pour préparer l'oligomère ;
puis en présence de l'oligomère de l'étape A
B) former un polymère en polymérisant :
i) éventuellement au moins un groupe fonctionnel uréido de formule 1 (telle que décrite dans les présentes, composant B-I), en outre éventuellement dans une quantité supérieure ou égale à 0,01 % ; et
ii) éventuellement au moins un autre monomère éthyléniquement insaturé (composant B-II), en outre dans une quantité inférieure ou égale à 100 % ;
où toutes les quantités des composants B-I et B-II sont des pourcentages en poids de la quantité totale des fractions utilisées pour préparer le polymère B et ne s'élèvent pas au total à plus de 100 % ;
où l'un au moins des composants uréido facultatifs (A-I et B-I) est présent.

3. Système oligomère-polymère obtenu et/ou pouvant être obtenu par un procédé selon la revendication 2.

4. Encre comprenant un liant selon la revendication 1 et/ou un système oligomère-polymère selon la revendication 3, avec un pigment et éventuellement un diluant.

5. Substrat imprimé avec une encre selon la revendication 4.

6. Procédé d'impression d'un substrat comprenant les étapes consistant à :
i) imprimer une encre selon la revendication 4 sur le substrat ; et
ii) sécher le substrat pour former une image imprimée sur celui-ci.

7. Procédé de fabrication d'un liant selon la revendication 1 et/ou d'un système oligomère-polymère selon la revendication 3 en vue d'obtenir une encre d'impression.

8. Procédé selon la revendication 7 en vue d'obtenir des encres ayant une résistance chimique telle que mesurée par la résistance au frottement humide Satra après 50 rotations d'au moins 50 %.

9. Utilisation d'un groupe fonctionnel uréido de formule 1 telle que représentée dans la revendication 1 dans un procédé de fabrication d'un système oligomère-polymère et/ou d'un liant en vue d'obtenir un liant pour une encre d'impression.

10. Utilisation selon la revendication 9 en vue d'obtenir une résistance chimique telle que mesurée par la résistance au frottement humide Satra après 50 rotations d'au moins 50 %.
